**Europäisches Patentamt**

**European Patent Office**

**Office européen des brevets**

(19)

(11) Veröffentlichungsnummer: **0 186 138**
A2

(12) # EUROPÄISCHE PATENTANMELDUNG

(21) Anmeldenummer: **85116237.0**

(22) Anmeldetag: **19.12.85**

(51) Int. Cl.⁴: **G 01 J 1/04**
**G 01 J 1/58**

---

(30) Priorität: **20.12.84 DE 3446464**

(43) Veröffentlichungstag der Anmeldung:
**02.07.86 Patentblatt 86/27**

(84) Benannte Vertragsstaaten:
**CH DE FR GB LI NL**

(71) Anmelder: **Firma Carl Zeiss**

**D-7920 Heidenheim (Brenz)(DE)**

(84) Benannte Vertragsstaaten:
**CH DE FR LI NL**

(71) Anmelder: **CARL-ZEISS-STIFTUNG Trading as CARL ZEISS**

**D-7920 Heidenheim (Brenz)(DE)**

(84) Benannte Vertragsstaaten:
**GB**

(72) Erfinder: **Müller, Gerhard, Prof. Dr.**
**Philipp-Funk-Strasse 112**
**D-7080 Aalen(DE)**

---

(54) **Laserwarngerät für militärische Fahrzeuge.**

(57) Zum Nachweis der Strahlung, die von Laser-Entfernungsmessern zur Anmessung von Landfahrzeugen ausgesendet wird, wird ein Strahlungskollektor angegeben, der mit einem Detektor verbunden ist, und der eine Richtungsortung der nachzuweisenden Strahlen ermöglicht.

Fig. 4

Fig. 2

EP 0 186 138 A2

Beschreibung:

Laserwarngerät für militärische Fahrzeuge

Die Erfindung betrifft eine Vorrichtung zum Anzeigen von elektro-magnetischen Strahlen und besteht aus einem Kollektor für die nachzuweisende
Strahlung, der als Lichtleitfaser mit einer Kern- und Mantelzone auf
einen Träger gewickelt ist und dessen Enden mit Photodetektoren verbunden
sind.

Eine derartige Vorrichtung ist in der deutschen Offenlegungsschrift DE 31
19 570 A1 beschrieben. Bei dieser bekannten Vorrichtung werden als
Strahlungssensoren optische Fasern verwendet, die aus einem Kernmaterial,
das bei Anregung durch kurzwellige Strahlung fluoresziert und einem
Mantelmaterial, das nicht fluoreszierend ist, zur Anzeige von Verbren-
nungs- oder Zündvorgängen und zur berührungslosen Übertragung von Lichtsignalen zwischen zwei gegeneinander bewegten Teilen verwendet.

In der Wehrtechnik werden gegnerische Objekte mit Laser-Entfernungsmessern angemessen, um eine hohe Treffsicherheit beim Erstschuß zu gewährleisten. Die Entfernungsmesser arbeiten im nahen Infrarot (Rubin-Laser
bei 694nm, YAG-Laser bei 1060nm oder Erbium-Laser bei 1566nm) bzw. im
mittleren Infrarot ($CO_2$ -Laser bei 10,6 um).

Der Erfindung liegt die Aufgabe zugrunde, den Führer eines mitiltärischen
Fahrzeuges zu warnen, wenn sein Fahrzeug durch ein gegnerisches Laser-
Entfernungsmeßgerät angemessen wird.

Diese Aufgabe wird erfindungsgemäß dadurch gelöst, daß die vorbeschriebene bekannte Vorrichtung auf dem zu warnenden Fahrzeug angebracht ist,
wobei das Kern- und/oder Mantelmaterial der Lichtleitfasern mit Streuzentren versehen sind, die einen gewissen Prozentsatz der orthogonal
auftreffenden Strahlung in die Faser einkoppeln. Da die Entfernungsmesser
mit relativ hohen Pulsleistungen arbeiten, reicht bereits ein sehr
geringer Einkoppelwirkungsgrad aus, um den erwünschten Effekt zu erreichen.

In bevorzugten Ausführungsformen der Erfindung besitzt der Träger für die Lichtleitfasern Kugel- oder Zylinderform. Bei Segmentierung dieser Träger, z.B. in zwei Kugelhälften oder zwei Zylinderabschnitte, und bei Montage von mindestens zwei solcher Vorrichtungen am Fahrzeug ist auch eine grobe Richtungsortung möglich.

Die mit der Erfindung erzielten Vorteile liegen insbesondere darin, daß außerhalb des Trägerfahrzeuges keine Elektronik erforderlich ist für die Anzeige auftreffender Laserstrahlung.

Ausführungsbeispiele der Erfindung sind in der Zeichnung dargestellt und werden im folgenden näher beschrieben. Es zeigen

Fig. 1    einen für die Erfindung verwendbaren monofilen Strahlungssensor;

Fig. 2    einen für die Erfindung verwendbaren Strahlungssensor in Form eines auf eine Kugel aufgebrachten Faserwickels;

Fig. 3    einen für die Erfindung verwendbaren Strahlungssensor in Form eines auf Zylinderquadranten aufgebrachten Faserwickels;

Fig. 4    ein nach der Erfindung mit Strahlungssensoren ausgerüstetes Fahrzeug.

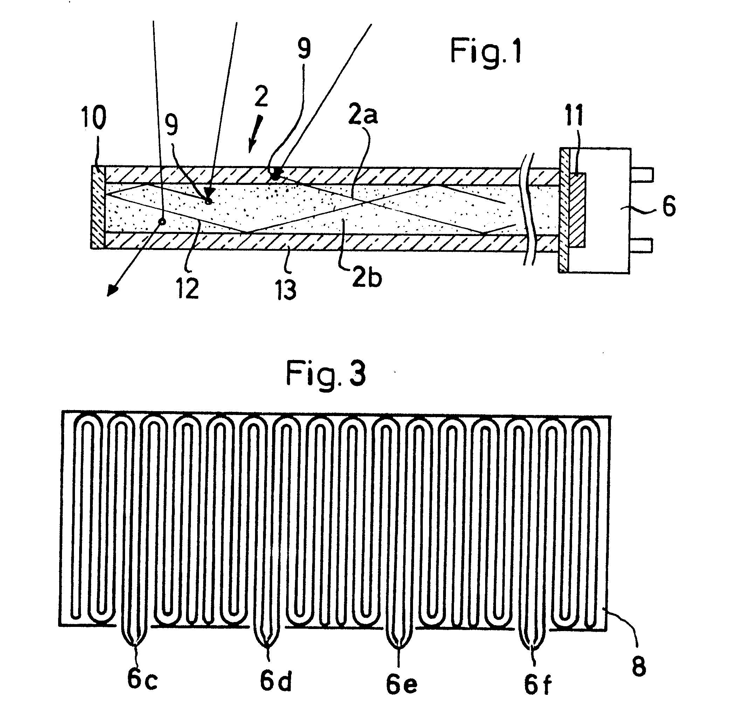

Der in Fig. 1 dargestellte Strahlungssensor besteht aus einer aus einem Mantel 2a und einem Kern 2b bestehenden Lichtleitfaser und aus einem Detektor 6. Die Lichtleitfaser ist in ihren Kern- und Mantelbereichen mit Streuzentren 9 für das auftreffende Licht dotiert. Die Streuzentren können sich auch nur im Mantelmaterial oder nur im Kern der Faser befinden, wenn der Mantel durchlässig für die auftreffende Strahlung ist. Die Lichtleitfaser wirkt somit als Kollektor für die nachzuweisende Strahlung. Die in die Faser eingebrachten Streuzentren bewirken, daß ein gewisser Prozentsatz der orthogonal auftreffenden Strahlung in die Faser eingekoppelt wird. Da der Kern 2b einen höheren Brechungsindex als der Mantel 2a besitzt, wird die im Kern gestreute Strahlung teilweise durch Totalreflexion an der Grenzfläche zwischen Kern und Mantel zu den Enden der als Kollektor wirkenden Faser geführt. Da eine Seite des Kollektors mit einer Spiegelschicht 10 versehen ist, gelangt das im Kern geführte Streulicht 12,13 auf die photoempfindliche Schicht 11 des Detektors 6, der auf der dem Spiegel 10 gegenüberliegenden Seite des Kollektors angebracht ist. Ein Teil des gestreuten Lichtes tritt aus dem Kern 26 aus, wenn es unter einem stumpferen Winkel als den durch die Brechzahl der beiden Medien 2a und 2b vorgegebenen Grenzwinkel für Totalreflektion auf die Grenzfläche auftrifft.

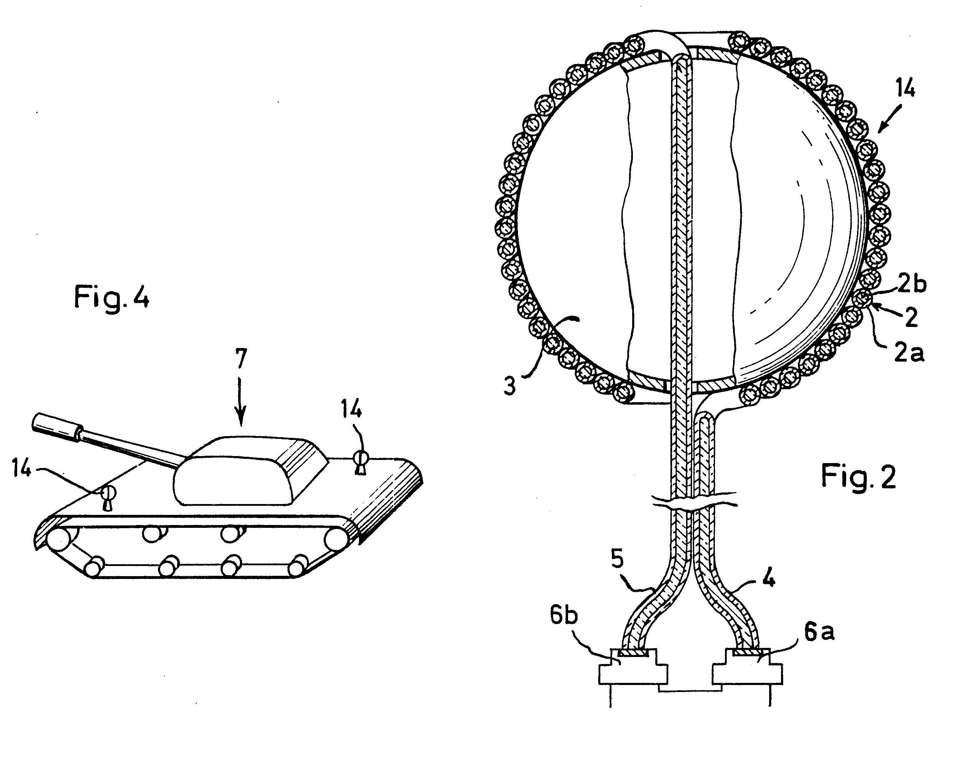

Fig. 2 zeigt ein nach dem in Fig. 1 dargestellten Prinzip arbeitenden Sensor 14, bei dem der Kollektor als Faser ausgebildet und in einlagiger Schicht auf eine Kugel 3 aufgewickelt ist. Die Enden 4 und 5 der Faser sind an zwei Detektoren 6a und 6b angekoppelt. In dieser Ausführung besitzt der Sensor keine Vorzugsrichtung und ist zum Nachweis diffuser Strahlung geeignet. Bei Segmentierung dieses Sektors z.B. in zwei Kugelhälften und bei Montage von mindestens zwei solcher Sensoren an einem Fahrzeug ist eine grobe Richtungsortung möglich.

In Fig. 3 ist die abgewickelte Zylinderfläche eines Vier-Quadrantenkollektors mit 8 bezeichnet, dessen Faserenden den Detektoren 6c,6d,6e und 6f zugeführt werden.

In der Fig. 4 ist ein militärisches Fahrzeug 7 dargestellt, bei dem zwei Kollektoren 14 zur Anzeige und Richtungsortung von Laserstrahlung angebracht sind, die von gegnerischen Laser-Entfernungsmessern im nahen Infrarot und mittleren Infrarot ausgesendet werden.

Optische Entfernungsmeßsysteme, die Unterwasserfahrzeuge anmessen, arbeiten im sichtbaren Spektralbereich. Zur Anzeige der Strahlung dieser Entfernungsmeßsysteme würden sich Strahlungssensoren mit fluoreszierendem Material, wie in der Patentanmeldung DE 31 19 570 A1 beschrieben, eignen.

4

**0186138**

Patentansprüche:

1. Vorrichtung zum Anzeigen von elektro-magnetischen Strahlen, bestehend aus einem Kollektor für die nachzuweisende Strahlung, der als Lichtleitfaser (2) mit einer Kern- und Mantelzone auf einen Träger gewickelt ist und dessen Enden (4,5) mit einem Photodetektor (60,66) verbunden sind, dadurch gekennzeichnet, daß die Vorrichtung als Laserwarngerät (1) auf einem militärischen Fahrzeug (7) angebracht ist.

2. Vorrichtung nach Anspruch 1, dadurch gekennzeichnet, daß der Träger als Kugel (3) ausgebildet ist.

3. Vorrichtung nach Anspruch 1, dadurch gekennzeichnet, daß der Träger als Zylinder ausgebildet ist.

4. Vorrichtung nach den Ansprüchen 2 und 3, dadurch gekennzeichnet, daß der Träger segmentiert ist.

5. Vorrichtung nach Anspruch 1, dadurch gekennzeichnet, daß die Lichtleitfasern (2) mit Streuzentren (9) für die auftreffende Strahlung versehen sind.

6. Vorrichtung nach Anspruch 1, dadurch gekennzeichnet, daß die Lichtleitfasern (2) fluoreszierendes Material enthalten.

Fig.1

10   9   9   2   2a   11

12   13   2b   6

Fig.3

6c   6d   6e   6f   8

0186138

Fig. 4

Fig. 2